# EUROPEAN PATENT APPLICATION

(11) **EP 3 518 205 A1**
(43) Date of publication of application: **31.07.2019**
(21) Application number: 17852880.8
(22) Date of filing: 12.09.2017
(51) Int. Cl.: G08G 1/09, B60R 21/00, B60W 50/14, G08G 1/16

(54) **VEHICLE CONTROL DEVICE, VEHICLE CONTROL METHOD, AND MOVING BODY**

(30) Priority: 26.09.2016 JP 2016186479
(71) Applicant: Sony Corporation, Tokyo 108-0075 (JP)
(72) Inventor: KANEKO, Asako, Tokyo 108-0075 (JP); TANAKA, Noriko, Tokyo 108-0075 (JP); MARUKAWA, Kazuyuki, Tokyo 108-0075 (JP); YUKAWA, Yasuhiro, Tokyo 108-0075 (JP); SHIMIZU, Itaru, Tokyo 108-0075 (JP); HAYAMIZU, Shinnosuke, Tokyo 108-0075 (JP)
(74) Representative: Witte, Weller & Partner Patentanwälte mbB
(86) International application number: PCT/JP2017/032748
(87) International publication number: WO 2018/056103

(57) **Abstract**

The present technology relates to a vehicle control apparatus, a vehicle control method, and a movable object that make it possible to realize travelling in a more appropriate operation mode.

An acquisition unit acquires, as information regarding an operation mode of a different vehicle, operation mode information indicating the operation mode of the different vehicle or operation mode switching information indicating that the different vehicle has switched the operation mode, for example. A determination unit determines an operation mode of a host vehicle in accordance with the received information regarding the operation mode of the different vehicle (e.g., the operation mode information indicating the operation mode of the different vehicle or the operation mode switching information indicating that the different vehicle has switched the operation mode). The present technology is applicable to, for example, an ECU for controlling a vehicle that performs automatic driving.

## Description

### Technical Field

The present technology relates to a vehicle control apparatus, a vehicle control method, and a movable object, and particularly to a vehicle control apparatus, a vehicle control method, and a movable object that make it possible to realize travelling in an appropriate operation mode.

### Background Art

Currently, technological development relating to automatic driving of an automobile is actively performed. An operation mode of an automobile capable of performing automatic driving can be roughly divided into, for example, three modes of manual driving, assisted driving, and automated driving. The assisted driving is an operation mode in which a control system of a vehicle assists driving by a passenger. The automated driving is an operation mode in which a control system of a vehicle completely controls driving without requiring driving by a passenger.

The operation mode can be switched by a driver at an arbitrary timing or automatically by a control system.

As an example of the latter, Patent Literature 1 discloses that automatic driving of a host vehicle is interrupted on the basis of an interruption history of automatic driving control of another vehicle in a route of a host vehicle. In accordance with this technology, for example, the operation mode is switched from automatic driving to manual driving in the section where accidents have frequently occurred in the past.

Further, Patent Literature 2 describes that the control content of automatic driving of a host vehicle is changed in accordance with whether or not there is a different vehicle that performs manual driving around the host vehicle, by, for example, increasing the distance to the different vehicle.

### Citation List

### Patent Literature

Patent Literature 1: Japanese Patent Application Laid-open No. 2015-153153
Patent Literature 2: Japanese Patent Application Laid-open No. 2015-44432

### Disclosure of Invention

### Technical Problem

However, the operation mode of the host vehicle has not been switched in accordance with the operation mode of the different vehicle that travels around the host vehicle. Therefore, there is a possibility that the host vehicle cannot travel in an appropriate operation mode in the case where vehicles in different operation modes coexist.

The present technology has been made in view of the above-mentioned circumstances and it is an object thereof to realize travelling in a more appropriate operation mode.

### Solution to Problem

A vehicle control apparatus according to the present technology includes: a determination unit that determines an operation mode of a host vehicle in accordance with received information regarding an operation mode of a different vehicle.

A vehicle control method according to the present technology includes the step of: determining an operation mode of a host vehicle in accordance with received information regarding an operation mode of a different vehicle.

A movable object according to the present technology includes: a determination unit that determines an operation mode of a host vehicle in accordance with received information regarding an operation mode of a different vehicle.

In the present technology, an operation mode of a host vehicle is determined in accordance with received information regarding an operation mode of a different vehicle.

### Advantageous Effects of Invention

In accordance with the present technology, it is possible to realize traveling in a more appropriate operation mode. It should be noted that the effect described here is not necessarily limitative and may be any effect described in the present disclosure.

### Brief Description of Drawings

Fig. 1 is a diagram showing a configuration example of an embodiment of a vehicle to which the present technology is applied.
Fig. 2 is a diagram describing blocks to be connected to a bus for CAN communication.
Fig. 3 is a block diagram showing a configuration example of a vehicle that realizes an around view monitor function.
Fig. 4 is a diagram describing another example of the blocks to be connected to the bus for CAN communication
Fig. 5 is a block diagram showing a configuration example of a vehicle control unit according to a first embodiment.
Fig. 6 is a flowchart describing operation mode switching processing.
Fig. 7 is a diagram describing reception of peripheral vehicle information.
Fig. 8 is a flowchart describing preprocessing of percentage calculation of the operation mode.
Fig. 9 is a diagram showing an example of the result of the preprocessing of the percentage of the operation mode.
Fig. 10 is a flowchart describing operation mode switching processing.
Fig. 11 is a diagram showing an example of a screen displayed on a display unit.
Fig. 12 is a diagram showing an example of the screen displayed on the display unit.
Fig. 13 is a flowchart describing the preprocessing of percentage calculation of the operation mode.
Fig. 14 is a diagram showing an example of the result of the preprocessing of the percentage of the operation mode.
Fig. 15 is a block diagram showing a configuration example of a vehicle control unit according to a second embodiment.
Fig. 16 is a flowchart describing the operation mode switching processing.
Fig. 17 is a flowchart describing the operation mode switching processing.
Fig. 18 is a flowchart describing the operation mode switching processing.
Fig. 19 is a flowchart describing the operation mode switching processing.
Fig. 20 is a diagram showing a data configuration example of the peripheral vehicle information.
Fig. 21 is a flowchart describing the operation mode switching processing.
Fig. 22 is a diagram describing acquisition of information regarding an operation mode of a different vehicle.

### Mode(s) for Carrying Out the Invention

Hereinafter, favorable embodiments of the present technology will be described in detail with reference to the drawings. Note that in the specification and drawings, components including substantially the same functional configuration are denoted by the same reference symbols, and overlapping description will be omitted.

Further, description will be made in the following order.
1. Regarding Configuration of Vehicle
2. First Embodiment
3. Second embodiment
4. Modified example

### <1. Regarding Configuration of Vehicle>

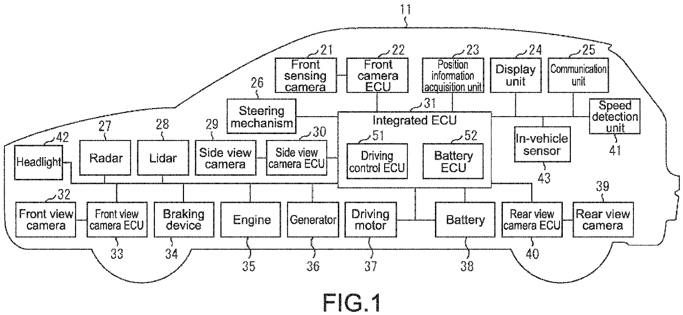

Fig. 1 is a diagram showing a configuration example of an embodiment of a vehicle as a movable object to which the present technology is applied.

A vehicle 11 shown in Fig. 1 includes a front sensing camera 21, a front camera ECU (Electronic Control Unit) 22, a position information acquisition unit 23, a display unit 24, a communication unit 25, the steering mechanism 26,a radar 27, a lidar (Light Detection and Ranging, or Laser Imaging Detection and Ranging: LIDAR) 28, a side view camera 29, a side view camera ECU 30, an integrated ECU 31, a front view camera 32, a front view camera ECU 33, a braking device 34, an engine 35, a generator 36, the driving motor 37, a battery 38, a rear view camera 39, a rear view camera ECU 40, and a vehicle speed detection unit 41, and an in-vehicle sensor 43.

The units provided in the vehicle 11 are connected to each other by a bus for CAN (Controller Area Network) communication, another connection line, and the like. However, in order to make the figure easy to see, the bus, the connection line, and the like are drawn without particularly distinguishing them.

The front sensing camera 21 includes, for example, a camera dedicated to sensing, which is disposed in the interior of the vehicle in the vicinity of a room mirror, images the front of the vehicle 11 as a subject, and outputs the resulting sensing image to the front camera ECU 22.

The front camera ECU 22 appropriately performs processing of improving the image quality or the like on the sensing image supplied from the front sensing camera 21, and then performs image recognition on the sensing image, thereby detecting an arbitrary object such as a white line and a pedestrian from the sensing image. The front camera ECU 22 outputs the result of image recognition to the bus for CAN communication.

The position information acquisition unit 23 includes, for example, a position information measuring system such as a GPS (Global Positioning System) and a quasi-zenith satellite system (QZSS), detects the position of the vehicle 11, and outputs the position information indicating the detection result to the bus for CAN communication.

The display unit 24 includes, for example, a liquid crystal display panel, and is disposed at a predetermined position in the interior of the vehicle such as the center position of an instrument panel and the inside of a room mirror. Further, the display unit 24 may be a transmissive display superimposed and provided on a windshield part, or a display of a car navigation system. The display unit 24 displays various images under the control of the integrated ECU 31.

The communication unit 25 transmits/receives information to/from a peripheral vehicle, a portable terminal device possessed by a pedestrian, a roadside device, or an external server by various kinds of wireless communication such as inter-vehicle communication, vehicle-to-pedestrian communication, and road-to-vehicle communication. For example, the communication unit 25 performs inter-vehicle communication with a peripheral vehicle, receives, from the peripheral vehicle, peripheral vehicle information including information indicating the number of occupants and the travelling state, and supplies it to the integrated ECU 31.

The steering mechanism 26 performs control of the traveling direction of the vehicle 11, i.e., steering angle control, in accordance with the driver's steering wheel operation or the control signal supplied from the integrated ECU 31. The radar 27 is a distance measuring sensor that measures the distance to an object such as a vehicle and a pedestrian in each direction such as forward and backward by using electromagnetic waves such as millimeter waves, and outputs the result of measuring the distance to the object to the integrated ECU 31 or the like. The lidar 28 is a distance measuring sensor that measures the distance to an object such as a vehicle and a pedestrian in each direction such as forward and backward by using light waves, and outputs the result of measuring the distance to the object to the integrated ECU 31 or the like.

The side view camera 29 is, for example, a camera disposed in a casing of a side mirror or in the vicinity of the side mirror, captures an image of the side (hereinafter, referred to also as the side image) of the vehicle 11 including an area to be a blind spot of the driver, and supplies it to the side view camera ECU 30.

The side view camera ECU 30 performs image processing of improving the image quality such as white balance adjustment on the side image supplied from the side view camera 29, and supplies the obtained side image to the integrated ECU 31 via a cable different from the bus for CAN communication.

The integrated ECU 31 includes a plurality of ECUs such as a driving control ECU 51 and a battery ECU 52 arranged at the center of the vehicle 11, and controls the operation of the entire vehicle 11.

For example, the driving control ECU 51 is an ECU realizing an ADAS (Advanced Driving Assistant System) function or an automated driving (Self driving) function, and controls the driving (travelling) of the vehicle 11 on the basis of various kinds of information such as the image recognition result from the front camera ECU 22, the position information from the position information acquisition unit 23, the peripheral vehicle information supplied from the communication unit 25, the measurement results from the radar 27 and the lidar 28, the result of detecting the travelling speed from the vehicle speed detection unit 41, and the like. That is, the driving control ECU 51 controls the steering mechanism 26, the braking device 34, the engine 35, the driving motor 37, and the like to control the driving of the vehicle 11. Further, the driving control ECU 51 controls, on the basis of presence or absence of head light of the oncoming vehicle, or the like, which is supplied from the front camera ECU 22 as the image recognition result, the headlight 42 to control beam application by the headlight 42 such as switching between a high beam and a low beam.

Note that in the integrated ECU 31, a dedicated ECU may be provided for each of the functions including the ADAS function, the automated driving function, and the beam control.

Further, the battery ECU 52 controls power supply or the like by the battery 38.

The front view camera 32 includes, for example, a camera disposed in the vicinity of a front grille, captures an image of the front (hereinafter, referred to also as the front image) of the vehicle 11 including an area to be a blind spot of the driver, and supplies it to the front view camera ECU 33.

The front view camera ECU 33 performs image processing of improving the image quality such as white balance adjustment on the front image supplied from the front view camera 32, and supplies the obtained front image to the integrated ECU 31 via a cable different from the bus for CAN communication.

The braking device 34 operates in accordance with the driver's braking operation or the control signal supplied from the integrated ECU 31, and stops or decelerates the vehicle 11. The engine 35 is a power source of the vehicle 11, and is driven in accordance with the control signal supplied from the integrated ECU 31.

The generator 36 is controlled by the integrated ECU 31, and generates power in accordance with driving of the engine 35. The driving motor 37 is a power source of the vehicle 11, receives power supply from the generator 36 or the battery 38, and is driven in accordance with the control signal supplied from the integrated ECU 31. Note that whether to drive the engine 35 or the driving motor 37 during travelling of the vehicle 11 is appropriately switched by the integrated ECU 31.

The battery 38 includes, for example, a battery of 12 V or a battery of 200 V, and supplies power to the respective units of the vehicle 11 in accordance with the control of the battery ECU 52.

The rear view camera 39 includes, for example, a camera disposed in the vicinity of a license plate of a tailgate, captures an image of the rear side (hereinafter, referred to also as the rear image) of the vehicle 11 including an area to be a blind spot of the driver, and supplies it to the rear view camera ECU 40. For example, the rear view camera 39 is activated when a shift lever (not shown) is moved to the position of the reverse (R).

The rear view camera ECU 40 performs image processing of improving the image quality such as white balance adjustment on the rear image supplied from the rear view camera 39, and supplies the obtained rear image to the integrated ECU 31 via a cable different from the bus for CAN communication.

The vehicle speed detection unit 41 is a sensor that detects the travelling speed of the vehicle 11, and supplies the result of detecting the travelling speed to the integrated ECU 31. Note that in the vehicle speed detection unit 41, from the result of detecting the traveling speed, the acceleration, or the differential of the acceleration may be calculated. For example, the calculated acceleration is used for estimating the time until the collision of the vehicle 11 with an object.

The headlight 42 operates in response to the control signal supplied from the integrated ECU 31, and outputs a beam to illuminate the front of the vehicle 11.

The in-vehicle sensor 43 is a sensor that detects the state and attribute of a passenger in the vehicle 11, and supplies the detection result to the integrated ECU 31. The in-vehicle sensor 43 detects, for example, information regarding the state of the driver, which seat in the vehicle 11 a passenger is sitting, whether the passenger is an adult or a child, and the like. Note that the in-vehicle sensor 43 may include an in-vehicle camera and an in-vehicle camera ECU. In this case, the in-vehicle sensor 43 detects information regarding the state of the driver, which seat in the vehicle 11 a passenger is sitting, whether the passenger is an adult or a child, and the like by performing image recognition on the image captured by the in-vehicle camera.

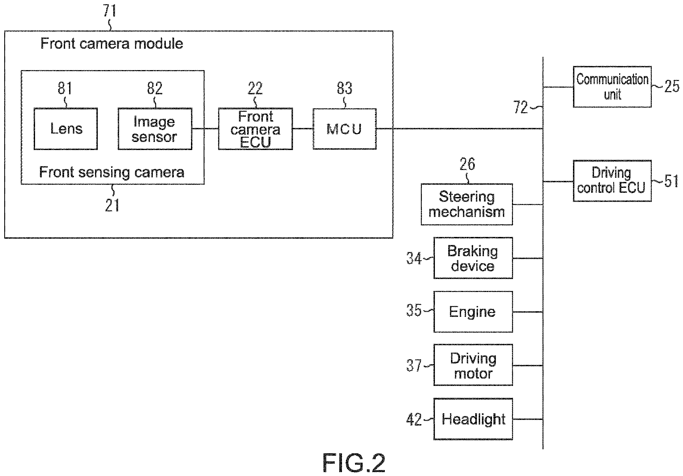

Further, in the vehicle 11, as shown in Fig. 2, a plurality of units including a front camera module 71, the communication unit 25, the driving control ECU 51, the steering mechanism 26, the braking device 34, the engine 35, the driving motor 37, and the headlight 42 are connected to each other via a bus 72 for CAN communication. Note that the components corresponding to those in Fig. 1 are denoted by the same reference symbols in Fig. 2, and description thereof will be appropriately omitted.

In this example, the front camera module 71 includes a lens 81, an image sensor 82, the front camera ECU 22, and an MCU (Module Control Unit) 83.

Further, the lens 81 and the image sensor 82 constitute the front sensing camera 21, and the image sensor 82 includes, for example, a CMOS (Complementary Metal Oxide Semiconductor) image sensor.

In the front camera module 71, light from a subject is collected on the imaging surface of the image sensor 82 by the lens 81. The image sensor 82 captures a sensing image by photoelectrically converting light that has entered from the lens 81, and supplies it to the front camera ECU 22.

The front camera ECU 22 performs, for example, gain adjustment, white balance adjustment, HDR (High Dynamic Range) processing, and the like on the sensing image supplied from the image sensor 82, and then performs image recognition on the sensing image.

In the image recognition, for example, a white line, a curb stone, a pedestrian, a vehicle, a headlight, a brake lamp, a road sign, a time until a collision with the forward vehicle, and the like are recognized (detected). The recognition results of the image recognition are converted into signals in a format for CAN communication by the MCU 83, and output to the bus 72.

Further, information supplied from the bus 72 is converted into a signal in a format defined for the front camera module 71 by the MCU 83, and supplied to the front camera ECU 22.

The driving control ECU 51 appropriately controls the steering mechanism 26, the braking device 34, the engine 35, the driving motor 37, the headlight 42, and the like on the basis of the result of image recognition output from the MCU 83 to the bus 72 and information supplied from other units such as the radar 27 and the lidar 28. Accordingly, driving control such as change of the travelling direction, braking, acceleration, and starting, warning notification control, beam switching control, and the like are realized.

Further, in the case where the driving control ECU 51 realizes the automated driving function or the like, for example, the locus of the position of the target object may be further recognized by the driving control ECU 51 from the image recognition result at each time obtained by the front camera ECU 22, and such a recognition result may be transmitted to an external server via the communication unit 25. In such a case, for example, in the server, learning such as a deep neural network is performed, and a necessary dictionary or the like is generated and transmitted to the vehicle 11. In the vehicle 11, the dictionary or the like obtained in this way is received by the communication unit 25, and the received dictionary or the like is used for various predictions and the like in the driving control ECU 51.

Note that of the controls performed by the driving control ECU 51, control that can be realized from only the result of image recognition on the sensing image may be performed not by the driving control ECU 51 but by the front camera ECU 22.

Specifically, for example, the front camera ECU 22 may control the headlight 42 on the basis of the presence or absence of headlight of the oncoming vehicle, which is obtained by the image recognition on the sensing image. In this case, for example, the front camera ECU 22 generates a control signal that instructs switching between a low beam and a high beam, or the like, and supplies the control signal to the headlight 42 via the MCU 83 and the bus 72, thereby controlling the beam switching by the headlight 42.

Alternatively, for example, the front camera ECU 22 may generate a warning notice of a collision against an object and a warning notice of departure from the travelling lane (lane) on the basis of the result of recognizing a white line, a curb stone, a pedestrian, and the like, which is obtained by the image recognition on the sensing image, and output it to the bus 72 via the MCU 83, thereby controlling the warning notice. In this case, the warning notice output from the front camera ECU 22 is supplied to, for example, the display unit 24 or a speaker (not shown). Accordingly, it is possible to display a warning on the display unit 24 or output a warning message through the speaker.

Further, in the vehicle 11, by displaying a composite image on the display unit 24 at the time of parking, for example, the around view monitor function is realized.

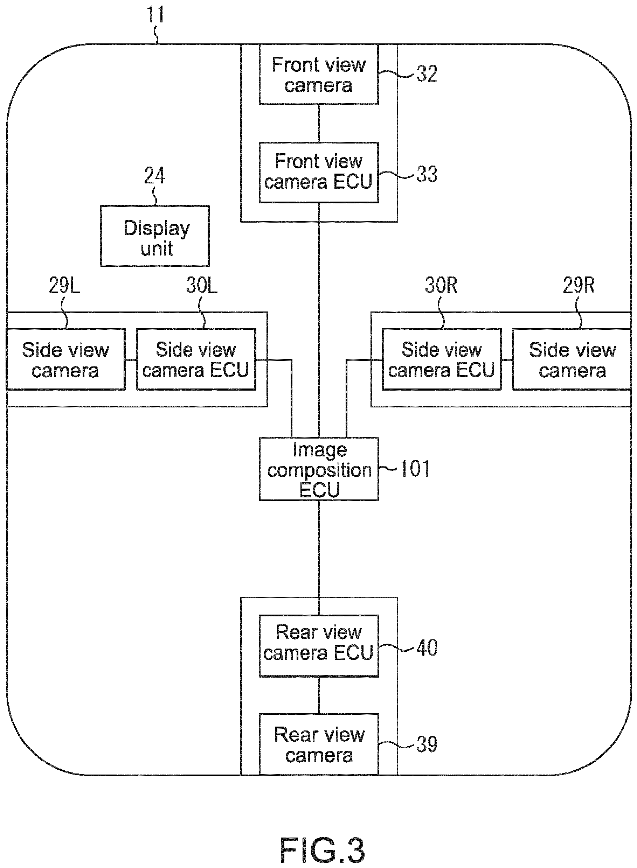

That is, as shown in Fig. 3, the front image, the rear image, and the side image obtained by the respective units are supplied, via a cable different from the bus for CAN communication, to an image composition ECU 101 provided in the integrated ECU 31, and a composite image is generated from the images. Note that the components corresponding to those in Fig. 1 are denoted by the same reference symbols in Fig. 3, and description thereof will be appropriately omitted.

In Fig. 3, as the side view camera 29 shown in Fig. 1, a side view camera 29L disposed on the left side of the vehicle 11 and a side view camera 29R disposed on the right side of the vehicle 11 are provided. Further, as the side view camera ECU 30, a side view camera ECU 30L disposed on the left side of the vehicle 11 and a side view camera ECU 30R disposed on the right side of the vehicle 11 are provided.

To the image composition ECU 101,the front image obtained by the front view camera 32 is supplied from the front view camera ECU 33 and the rear image obtained by the rear view camera 39 is supplied from the rear view camera ECU 40. Further, to the image composition ECU 101, the side image obtained by the side view camera 29L (hereinafter, particularly referred to also as the left side image) is supplied from the side view camera ECU 30L and the side image obtained by the side view camera 29R (hereinafter, particularly referred to also as the right side image) is supplied from the side view camera ECU 30R.

The image composition ECU 101 generates, on the basis of the supplied images, a composite image in which the front image, the rear image, the left side image, and the right side image are arranged in corresponding areas, and supplies the obtained composite image to the display unit 24 for display. The driver is capable of safely and easily parking the vehicle 11 by driving the vehicle 11 while watching the composite image displayed in this way. Note that the integrated ECU 31 may control the driving of the vehicle 11 on the basis of the composite image, and park the vehicle 11.

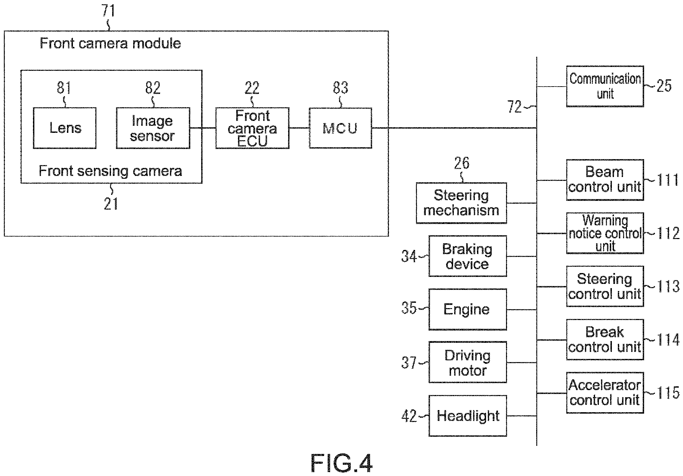

Further, the driving control ECU 51 does not necessarily need to control the plurality of different functions. For example, as shown in Fig. 4, a control unit may be provided for control content, i.e., each function. Note that the components corresponding to those in Fig. 2 are denoted by the same reference symbols in Fig. 4, and description thereof will be appropriately omitted.

In the example shown in Fig. 4, to the bus 72 for CAN communication, a plurality of units including the front camera module 71, the communication unit 25, the steering mechanism 26, the braking device 34, the engine 35, the driving motor 37, the headlight 42, a beam control unit 111, a warning notice control unit 112, a steering control unit 113, a break control unit 114, and an accelerator control unit 115.

In this example, the control performed by the driving control ECU 51 in the example shown in Fig. 2 is shared and performed by the beam control unit 111, the warning notice control unit 112, the steering control unit 113, the break control unit 114, and the accelerator control unit 115.

Specifically, for example, the beam control unit 111 performs control of switching a low beam and a high beam by controlling the headlight 42 on the basis of the result of image recognition, which is obtained by the front camera ECU 22. Further, the warning notice control unit 112 controls the warning notice such as displaying of various warnings on the display unit 24 and outputting a warning message by the speaker (not shown), on the basis of the result of image recognition, which is obtained by the front camera ECU 22.

The steering control unit 113 controls the travelling direction of the vehicle 11 by controlling the steering mechanism 26 on the basis of the result of image recognition, which is obtained by the front camera ECU 22, the measurement results from the radar 27 and the lidar 28, and the like. The break control unit 114 controls the stop and deceleration of the vehicle 11 by controlling the braking device 34 on the basis of the result of image recognition, which is obtained by the front camera ECU 22, the measurement results from the radar 27 and the lidar 28, and the like.

Further, the accelerator control unit 115 controls starting and acceleration of the vehicle 11 by controlling the engine 35 and the driving motor 37 on the basis of the result of image recognition, which is obtained by the front camera ECU 22, the measurement results from the radar 27 and the lidar 28, and the like.

### <2. First Embodiment>

### (Configuration Example of Vehicle Control Unit)

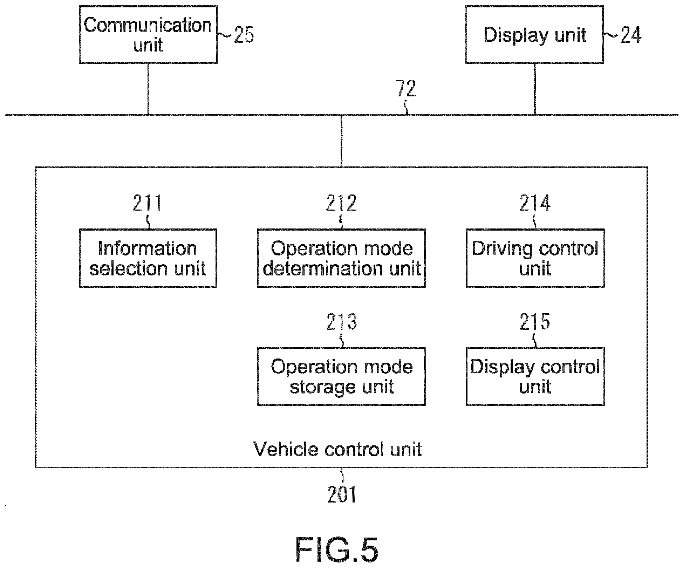

Fig. 5 shows a configuration example of a vehicle control unit according to a first embodiment of the present technology.

A vehicle control unit 201 in Fig. 5 is realized by, for example, the integrated ECU 31 shown in Fig. 1, particularly the driving control ECU 51, and executes driving assistant processing performed in the vehicle 11. The vehicle control unit 201 includes an information selection unit 211, an operation mode determination unit 212, an operation mode storage unit 213, a driving control unit 214, and a display control unit 215.

The information selection unit 211 selects information regarding an operation mode of a different vehicle from the peripheral vehicle information supplied from the communication unit 25. The information selection unit 211 appropriately controls the communication unit 25 to receive peripheral vehicle information through inter-vehicle communication with a peripheral vehicle present around the vehicle 11, and acquires the received peripheral vehicle information from the communication unit 25. The peripheral vehicle information may be received at regular time intervals, i.e., periodically, or may be received irregularly.

The operation mode determination unit 212 determines the operation mode of the host vehicle in accordance with the information regarding the operation mode of the different vehicle, which is selected by the information selection unit 211.

The operation mode storage unit 213 stores the (present) operation mode of the host vehicle determined by the operation mode determination unit 212.

The driving control unit 214 generates a control signal for controlling the vehicle 11 (host vehicle) in accordance with the operation mode of the host vehicle determined by the operation mode determination unit 212. The driving control unit 214 instructs the driving mechanisms such as the steering mechanism 26, the braking device 34, the engine 35, and the driving motor 37 to perform control corresponding to the operation mode, for example.

The display control unit 215 controls presentation of the operation mode determined by the operation mode determination unit 212. For example, the display control unit 215 causes the display unit 24 to display the determined operation mode.

### (Regarding Operation Mode)

Now, the operation mode of the vehicle will be described.

Here, the operation mode of the vehicle is roughly divided into three modes of fully manual driving, assisted driving, and automated driving.

The fully manual driving is an operation mode in which a driver performs all the driving of a host vehicle. In the fully manual driving, the driving authority is on the human side.

The assisted driving is an operation mode in which a control system of the vehicle performs a part of the driving to assist the driving by the driver. Also in the assisted driving, the driving authority is on the human side.

The automated driving is an operation mode in which the control system of the vehicle performs all the driving of the host vehicle. In the automated driving, the driving authority is on the vehicle side.

As described above, in the assisted driving, although a part of the driving is performed by the control system of the vehicle, the driving authority is on the human side.

Here, assumption is made that an operation mode in which the driving authority is on the human side is manual driving and an operation mode in which the driving authority is on the vehicle side is automatic driving. Therefore, in the following, the fully manual driving and assisted driving are regarded as the manual driving, and the automated driving is regarded as the automatic driving.

### (Operation Mode Switching Processing)

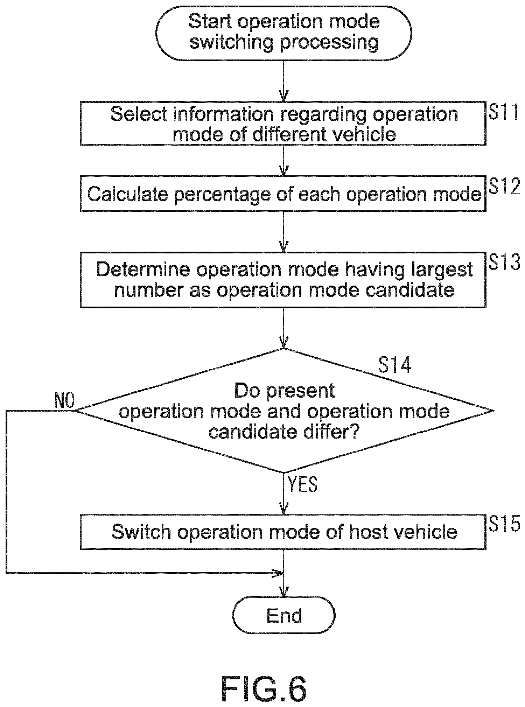

Next, operation mode switching processing by the vehicle control unit 201 will be described with reference to the flowchart of Fig. 6. Note that the processing in Fig. 6 is executed at predetermined time intervals (e.g., for every one second) while the vehicle 11 travels.

In Step S11, the information selection unit 211 selects, as the information regarding the operation mode of the different vehicle, the operation mode information indicating the operation mode of the different vehicle from the peripheral vehicle information received by the communication unit 25, and supplies it to the operation mode determination unit 212.

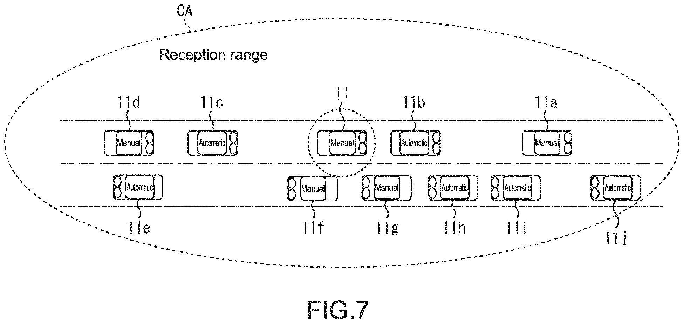

The communication unit 25 receives the peripheral vehicle information from a different vehicle that travels in a predetermined reception range around the vehicle 11. For example, as shown in Fig. 7, the communication unit 25 receives pieces of peripheral vehicle information from 10 vehicles 11a to 11j travelling in a reception range CA around the vehicle 11.

In the example of Fig. 7, the operation mode of the vehicle 11 (host vehicle) is the manual driving. Further, the operation modes of the vehicles 11a, 11d, 11f, and 11g out of the vehicles 11a to 11j (different vehicles) are each the manual driving, and the operation modes of the vehicles 11b, 11c, 11e, 11h, 11i, and 11j are each the automatic driving.

Therefore, in the example of Fig. 7, pieces of operation mode information of 10 different vehicles are acquired.

In Step S12, the operation mode determination unit 212 calculates the percentage of each operation mode by using the operation mode information selected by the information selection unit 211.

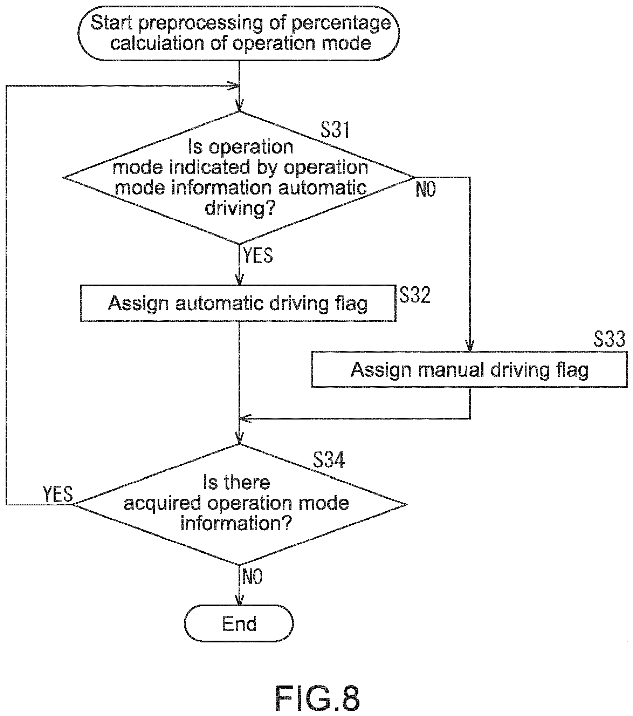

Now, preprocessing of percentage calculation of the operation mode executed before calculating the percentage of each operation mode will be described with reference to the flowchart of Fig. 8.

In Step S31, regarding one of a plurality of pieces of operation mode information selected by the information selection unit 211, the operation mode determination unit 212 determines whether or not the operation mode indicated by the operation mode information is the automatic driving.

In the case where it is determined in Step S31 that the operation mode is the automatic driving, the processing proceeds to Step S32, and the operation mode determination unit 212 assigns an automatic driving flag to the operation mode information.

Meanwhile, in the case where it is determined in Step S31 that the operation mode is not the automatic driving, the processing proceeds to Step S33, and the operation mode determination unit 212 assigns a manual driving flag to the operation mode information.

After Step S32 or S33, the operation mode determination unit 212 determines, in Step S34, whether or not there is still operation mode information selected by the information selection unit 211.

In the case where it is determined in Step S34 that there is still operation mode information, i.e., there is operation mode information to which no flag is assigned, the processing returns to Step S31, and the processing of Steps S31 to S33 is repeated for the operation mode information to which no flag is assigned.

Meanwhile, in the case where it is determined in Step S34 that there is no operation mode information, i.e., flags are assigned to all pieces of operation mode information, the preprocessing of percentage calculation of the operation mode is finished.

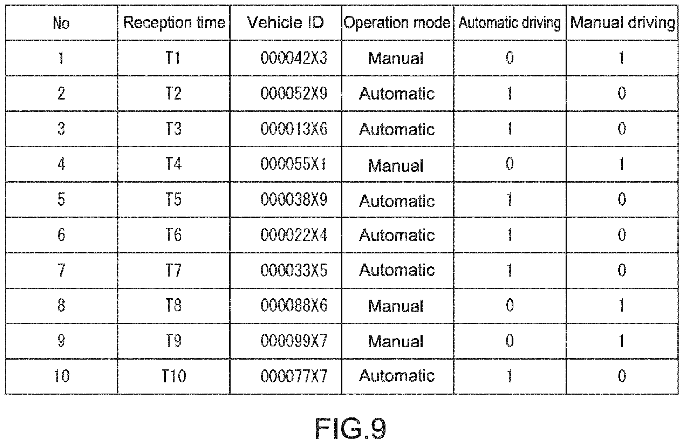

Fig. 9 shows an example of a table as a result of the preprocessing of percentage calculation of the operation mode.

In the table of Fig. 9, data of the reception time, the vehicle ID, the operation mode, the automatic driving flag, and the manual driving flag for each piece of operation mode information is shown.

The reception time represents the time when the communication unit 25 has received the peripheral vehicle information including the operation mode information, and is recorded in a format including units of milliseconds, such as hh:mm:ss.xxx.

The vehicle ID is information unique to the vehicle that has transmitted the peripheral vehicle information including the operation mode information.

The operation mode is an operation mode indicated by the operation mode information, and a value (0 or 1) is set to each of the automatic driving flag and the manual driving flag, depending on the operation mode.

In the example of Fig. 9, data is set for 10 pieces of operation mode information in accordance with the example of Fig. 7, the automatic driving flag is assigned to each of six pieces of operation mode information, and the manual driving flag is assigned to each of four pieces of operation mode information.

Here, in Step S12, the operation mode determination unit 212 calculates the percentage of each operation mode by using the table serving as the result of the preprocessing of percentage calculation of the operation mode.

Therefore, in the example of Fig. 9, since the operation mode of each of the six vehicles out of 10 vehicles travelling in the reception range CA around the vehicle 11 is the automatic driving and the operation mode of each of the four vehicles is the manual driving, the percentage of the automatic driving is calculated as 60% and the percentage of the manual driving is calculated as 40%.

After Step S12, the operation mode determination unit 212 determines, on the basis of the calculated percentage of the operation mode the operation mode having the largest number as an operation mode candidate that is a candidate for the operation mode of the vehicle 11 (host vehicle), and supplies information indicating the operation mode candidate to the driving control unit 214 in Step S13. In the example of Fig. 9, the automatic driving is determined as the operation mode candidate.

In Step S14, the driving control unit 214 determines whether or not the present operation mode of the vehicle 11 (host vehicle) stored in the operation mode storage unit 213 and the operation mode candidate differ, by using the information indicating the operation mode candidate.

In the case where it is determined in Step S14 that the present operation mode and the operation mode candidate differ, the driving control unit 214 generates a control signal corresponding to the operation mode candidate and controls each driving mechanism to switch the operation mode of the host vehicle to the operation mode candidate in Step S15. In the example of Fig. 7, since the operation mode of the host vehicle is the manual driving and the operation mode candidate is the automatic driving, the operation mode of the host vehicle is switched from the manual driving to the automatic driving. At this time, the operation mode stored in the operation mode storage unit 213 is updated to the operation mode candidate.

Meanwhile, in the case where it is determined in Step S14 that the present operation mode and the operation mode candidate do not differ, since the present operation mode and the operation mode candidate are the same, and there is no need to switch the operation mode of the host vehicle. Therefore, the driving control unit 214 does nothing, and the processing is finished.

In accordance with the above-mentioned processing, since the operation mode candidate is determined in accordance with the operation mode of the different vehicle travelling around the host vehicle and the operation mode of the host vehicle is switched to the determined operation mode candidate, it is possible to realize travelling in a more appropriate operation mode even in the case where vehicles in different operation modes coexist.

Although the processing of switching the operation mode of the host vehicle to the determined operation mode candidate has been described above, the determined operation mode candidate may be presented to the driver.

### (Another Example of Operation Mode Switching Processing)

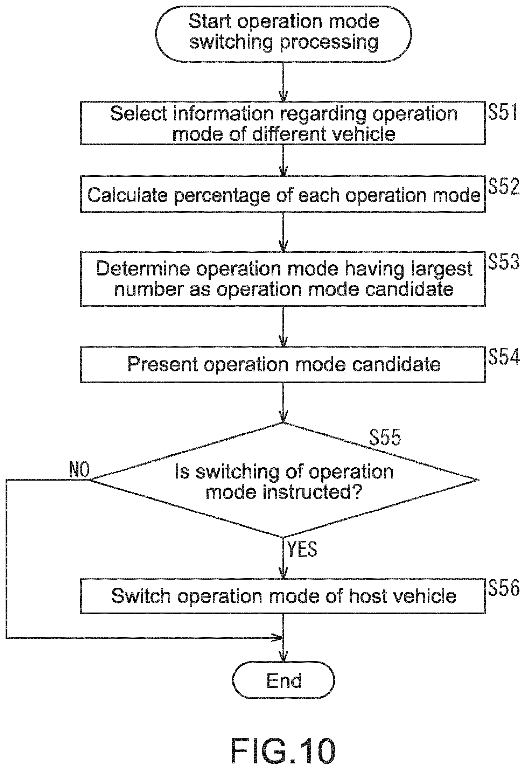

Fig. 10 is a flowchart describing another example of the operation mode switching processing by the vehicle control unit 201.

Note that the processing of Steps S51 to S53 in Fig. 10 is similar to the processing of Steps S11 to S13 in Fig. 6, description thereof will be omitted.

That is, after the operation mode candidate is determined in Step S53, the display control unit 215 presents, in Step S54, the determined operation mode candidate by using the information indicating the operation mode candidate from the operation mode determination unit 212. Specifically, the display control unit 215 causes the display unit 24 to display the operation mode candidate determined by the operation mode determination unit 212.

The driver is capable of determining whether to switch the operation mode of the host vehicle, by watching the operation mode candidate displayed on the display unit 24.

In this regard, in Step S55, the driving control unit 214 determines whether or not operation mode switching has been instructed by the driver.

In the case where it is determined in Step S55 that the operation mode switching has been instructed, the driving control unit 214 generates a control signal corresponding to the operation mode candidate in accordance with the instruction of the operation mode switching, and controls each driving mechanisms to switch the operation mode of the host vehicle to the operation mode candidate in Step S56.

Meanwhile, in the case where it is determined in Step S55 that the operation mode switching has not been instructed, the driving control unit 214 does nothing and the processing is finished.

In accordance with the above-mentioned processing, since the operation mode candidate is determined in accordance with the operation mode of the different vehicle travelling around the host vehicle and the determined operation mode candidate is presented to the driver, the driver is capable of determining to switch the operation mode to a more appropriate operation mode. As a result, it is possible to realize travelling in a more appropriate operation mode even in the case where vehicles in different operation modes coexist.

As described above, the driver is capable of grasping the information regarding the operation mode by checking the display unit 24.

### (Display Example of Information regarding Operation Mode)

In this regard, a display example of the information regarding the operation mode in the display unit 24 will be described below.

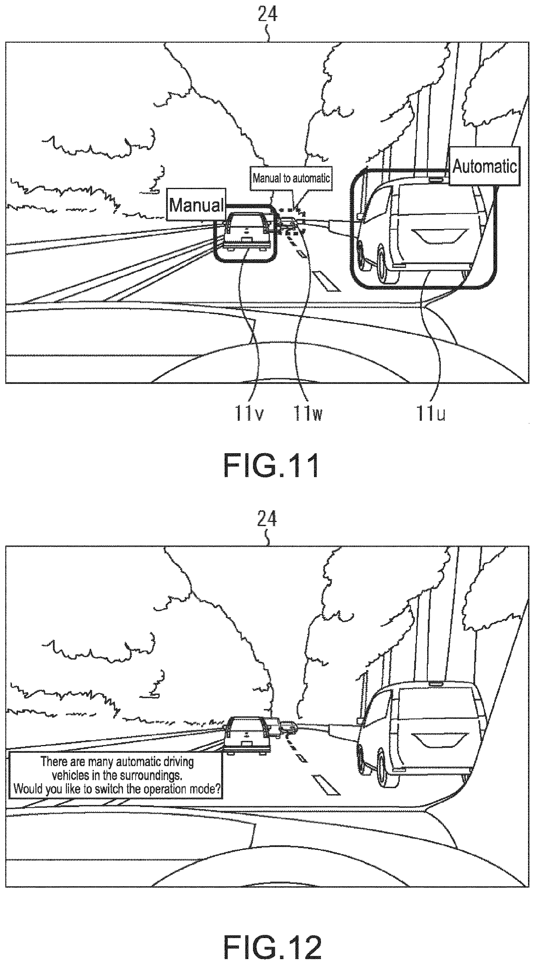

Fig. 11 shows a display example of the information regarding the operation mode.

The display unit 24 includes, for example, a head-up display (HUD), and an image of the information regarding the operation mode is superimposed and displayed on a windshield.

Specifically, in the example of Fig. 11, information regarding the operation mode of the different vehicle travelling in front of the host vehicle is superimposed and displayed on the front field of view in the host vehicle.

In the example of Fig. 11, the fact that the present operation mode of a vehicle 11u is the automatic driving and the present operation mode of a vehicle 11v is the manual driving is displayed by frames surrounding the vehicles, and characters. They may be displayed in different colors for each operation mode.

Further, in the example of Fig. 11, it is shown that the operation mode of a vehicle 11 w is switched from the manual driving from the automatic driving. In Fig. 11, the operation mode before switching and the operation mode after the switching are shown by characters such as "Manual to automatic". However, for example, in the case of displaying only characters representing the operation mode after the switching, the characters indicating the operation mode after the switching may be blinked and displayed so that it can be distinguished from the characters indicating the present operation mode.

Further, in the case where the operation mode is switched from the automatic driving to the manual driving, the operation modes of the driving mechanisms such as the steering mechanism 26, the braking device 34, and the engine 35 (or the driving motor 37) may be switched in a stepwise manner (in predetermined order). In this case, in the display unit 24, for the different vehicle of which the operation mode is switched from the automatic driving to the manual driving, the color of the frame surrounding the vehicle may be changed in a stepwise manner in accordance with the driving mechanism being switched in a stepwise manner.

Fig. 12 shows another display example of the information regarding the operation mode.

In the example of Fig. 12, a character string indicating a recommended operation mode (e.g., operation mode having the largest number out of the operation mods of different vehicles traveling therearound) is displayed. Specifically, the character string of "There are many automatic driving vehicles in the surroundings. Would you like to switch the operation mode?" is displayed. The display in Fig. 12 may be performed in the processing (Step S54) described with reference to the flowchart of Fig. 10.

Further, different display may be performed between when the manual driving is recommended during the automatic driving and when the automatic driving is recommended during the manual driving. For example, in the case where the manual driving is recommended during the automatic driving, for example, the in-vehicle sensor 43 detects whether or not the driver is facing forward or the like, and displays that the operation mode is to be switched, after confirming the stability of travelling in accordance with the state of the driver based on the detection result. Then, only in the case where there is an instruction to perform switching by the driver, the operation mode is switched. Further, in the case where the automatic driving is recommended during the manual driving, the operation mode is automatically switched when the timing to switch the operation mode has come. In this case, after the operation mode is switched, voice (chime or the like) indicating that the operation mode is switched may be output.

Further, in the processing described with reference to the flowchart of Fig. 10, the presentation of the operation mode candidate is performed by display on the display unit 24. However, it may be performed by voice output.

In the above description, the operation mode having the largest number in the operation modes of the different vehicles out of the two operation modes of the manual driving and the automatic driving is determined as the operation mode candidate. However, as described above, the operation mode of the vehicle can be roughly divided into three modes of the fully manual driving, the assisted driving, and the automated driving.

### (Another Example of Preprocessing of Percentage Calculation of Operation Mode)

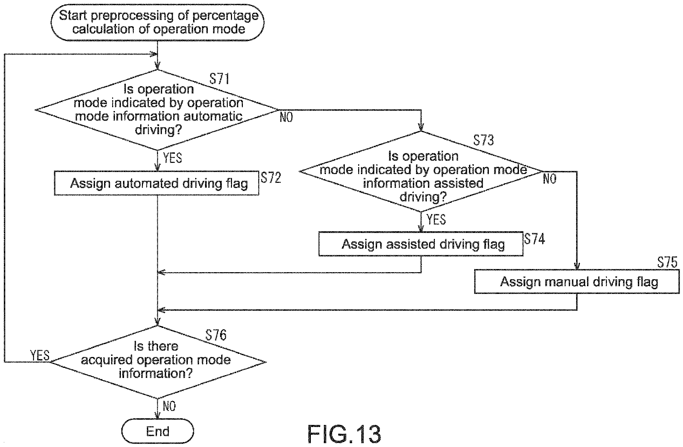

In this case, preprocessing of percentage calculation of the operation mode to be executed before calculating the percentage of each operation mode is executed in accordance with the flowchart of Fig. 13.

In Step S71, regarding one of the plurality of pieces of operation mode information selected by the information selection unit 211, the operation mode determination unit 212 determines whether or not the operation mode indicated by the operation mode information is the automated driving.

In the case where it is determined in Step S71 that the operation mode is the automated driving, the processing proceeds to Step S72, and the operation mode determination unit 212 assigns an automated driving flag to the operation mode information.

Meanwhile, in the case where it is determined in Step S71 that the operation mode is not the automated driving, the processing proceeds to Step S73, and the operation mode determination unit 212 determines whether or not the operation mode indicated by the operation mode information is the assisted driving.

In the case where it is determined in Step S73 that the operation mode is the assisted driving, the processing proceeds to Step S74, and the operation mode determination unit 212 assigns an assisted driving flag to the operation mode information.

Meanwhile, in the case where it is determined in Step that the operation mode is not the assisted driving, the processing proceeds to Step S75, and the operation mode determination unit 212 assigns a manual driving (fully manual driving) flag to the operation mode information.

After Step S72, S74, or S75, the operation mode determination unit 212 determines, in Step S76, whether or not there is still operation mode information selected by the information selection unit 211.

In the case where it is determined in Step S76 that there is still operation mode information, i.e., there is operation mode information to which no flag is assigned, the processing returns to Step S71, and the processing of Steps S71 to S75 is repeated for the operation mode information to which no flag is assigned.

Meanwhile, in the case where it is determined in Step S76 that there is no operation mode information, i.e., flags are assigned to all pieces of operation mode information, the preprocessing of percentage calculation of the operation mode is finished.

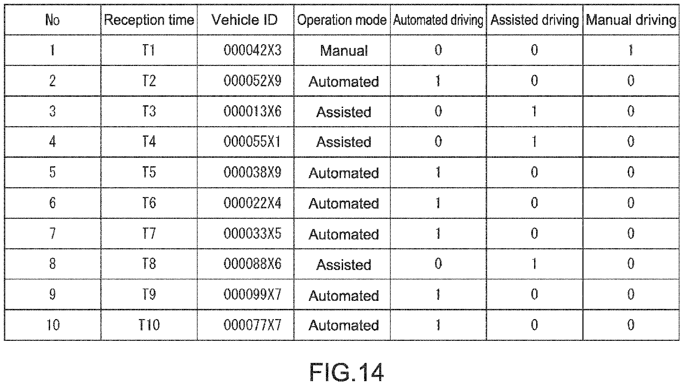

Fig. 14 shows an example of the table as the result of the preprocessing of percentage calculation of the operation mode in Fig. 13.

The table in Fig. 14 shows the data of the reception time, the vehicle ID, the operation mode, the automated driving flag, the assisted driving flag, and the manual driving flag for each piece of operation mode information is shown.

In the example of Fig. 14, a value (0 or 1) is set to each of the automated driving flag, the assisted driving flag, and the manual driving flag, depending on the operation mode indicated by the operation mode information.

Further, in the example of Fig. 14, data is set for 10 pieces of operation mode information, the automated driving flag is assigned to each of six pieces of operation mode information, the assisted driving flag is assigned to each of three operation mode information, and the manual driving flag is assigned to one piece of operation mode information.

Therefore, in the example of Fig. 14, since the operation mode of each of the six vehicles out of the 10 different vehicles is the automated driving, the operation mode of each of the three vehicles is the assisted driving, and the operation mode of the one vehicle is the manual driving, the percentage of the automated driving is calculated as 60%, the percentage of the assisted driving is calculated as 30% and the percentage of the manual driving is calculated as 10%.

Although the operation mode information indicating the operation mode of the different vehicle is acquired as the information regarding the operation mode of the different vehicle in the above-mentioned embodiment, in the case where the operation mode of a different vehicle is switched, information indicating that the operation mode is switched may be acquired.

### <3. Second Embodiment>

### (Configuration Example of Vehicle Control Unit)

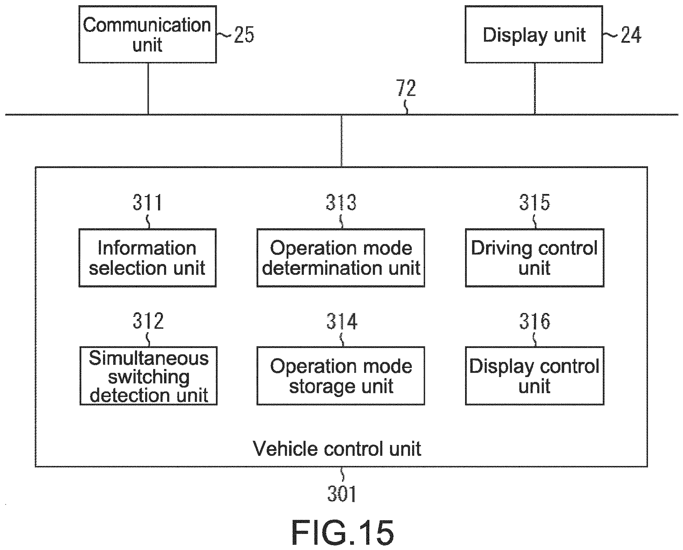

Fig. 15 shows a configuration example of a vehicle control unit according to a second embodiment of the present technology.

A vehicle control unit 301 in Fig. 15 includes an information selection unit 311, a simultaneous switching detection unit 312, an operation mode determination unit 313, an operation mode storage unit 314, a driving control unit 315, and a display control unit 316.

Note that in the vehicle control unit 301 in Fig. 15, since the operation mode storage unit 314, the driving control unit 315, and the display control unit 316 respectively have the same functions as those of the operation mode storage unit 213, the driving control unit 214, and the display control unit 215 in the vehicle control unit 201 in Fig. 5, description thereof will be omitted.

The information selection unit 311 selects, as the information regarding the operation mode of the different vehicle, operation mode switching information indicating that the operation mode of a different vehicle has been switched from the peripheral vehicle information supplied from the communication unit 25.

The simultaneous switching detection unit 312 detects, on the basis of the operation mode switching information selected by the information selection unit 311, simultaneous switching in which operation modes of a predetermined number or more of different vehicles are switched. The simultaneous switching detection unit 312 supplies, to the operation mode determination unit 313, information indicating whether or not the simultaneous switching has been detected.

The operation mode determination unit 313 determines the operation mode of the vehicle 11 (host vehicle) in accordance with the information supplied from the simultaneous switching detection unit 312.

### (Operation Mode Switching Processing)

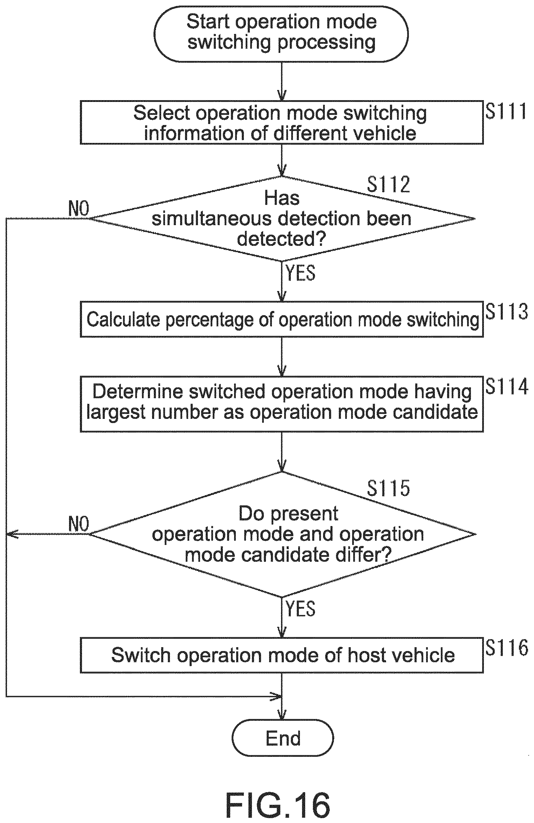

Next, operation mode switching processing by the vehicle control unit 301 will be described with reference to the flowchart of Fig. 16. Also the processing of Fig. 16 is executed at predetermined time intervals (e.g., for every one second) while the vehicle 11 travels.

In Step S111, the information selection unit 311 selects, as the information regarding the operation mode of the different vehicle, operation mode switching information indicating that the operation mode of a different vehicle has been switched from the peripheral vehicle information received by the communication unit 25, and supplies it to the simultaneous switching detection unit 312.

In Step S112, the simultaneous switching detection unit 312 determines, on the basis of the number of pieces of operation mode switching information selected in a predetermined time period (e.g., several msec), whether or not the simultaneous switching has been detected. The information indicating whether or not the simultaneous switching has been detected is supplied to the operation mode determination unit 313.

In the case where it is determined in Step S112 that the simultaneous switching has been detected, the processing proceeds to Step S113, and the operation mode determination unit 313 calculates the percentage of operation mode switching by using the information supplied from the simultaneous switching detection unit 312.

For example, in the case where there are two operation modes of the manual driving and the automatic driving as the operation mode, the percentage of the operation mode switching is calculated on the basis of the operation mode switching information indicating switching from the manual driving to the automatic driving and the operation mode switching information indicating switching from the automatic driving to the manual driving.

Further, in the case where there are three operation modes of the manual driving, the assisted driving, and the automated driving as the operation mode, although illustration is omitted, the percentage of the operation mode switching is calculated on the basis of six types of operation mode switching information.

In Step S114, the operation mode determination unit 313 determines, on the basis of the calculated percentage of the operation mode switching, the switched operation mode having the largest number as the operation mode candidate that is a candidate for the operation mode of the vehicle 11 (host vehicle), and supplies information indicating the operation mode candidate to the driving control unit 315.

In Step S115, the driving control unit 315 determines whether or not the present operation mode of the vehicle 11 (host vehicle) stored in the operation mode storage unit 314 and the operation mode candidate differ, by using the information indicating the operation mode candidate.

In the case where it is determined in Step S115 that the present operation mode and the operation mode candidate differ, the driving control unit 315 generates a control signal corresponding to the operation mode candidate, and controls each driving mechanism to switch the operation mode of the host vehicle to the operation mode candidate in Step S116. At this time, the operation mode stored in the operation mode storage unit 314 is updated to the operation mode candidate.

Meanwhile, in the case where it is determined in Step S115 that the present operation mode and the operation mode candidate do not differ, since the present operation mode and the operation mode candidate are the same, it is not necessary to switch the operation mode of the host vehicle. Therefore, the driving control unit 315 does nothing, and the processing is finished. Further, also in the case where it is determined in Step S112 that the simultaneous switching has not been detected, the operation mode is not switched, and the processing is finished.

In accordance with the above-mentioned processing, since the operation mode candidate is determined in accordance with the simultaneous switching and the operation mode of the host vehicle is switched to the determined operation mode candidate, it is possible to realize travelling in a more appropriate operation mode particularly when an accident in which detection of the simultaneous switching is expected to be detected occurs, when an emergency vehicle such as an ambulance approaches, or when a disaster such as an earthquake and a fire occurs.

Although the processing of switching the operation mode of the host vehicle to the determined operation mode candidate has been described above, the determined operation mode candidate may be presented to the driver.

### (Another Example of Operation Mode Switching Processing)

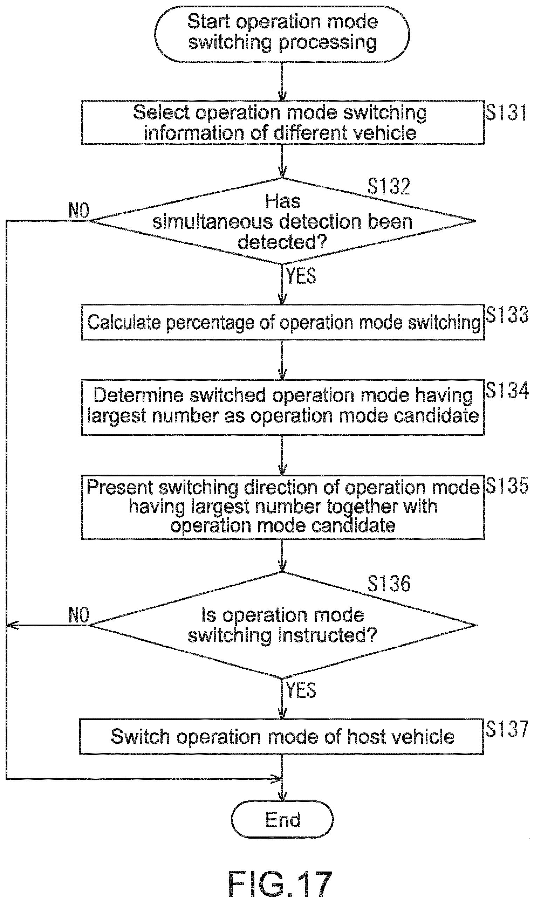

Fig. 17 is a flowchart describing another example of the operation mode switching processing by the vehicle control unit 301.

Note that the processing of Steps S131 to S134 in Fig. 17 is similar to the processing of Steps S111 to S114 in Fig. 16, description thereof will be omitted.

That is, after the operation mode candidate is determined in Step S134, the operation mode determination unit 313 supplies, to the display control unit 316, information indicating the operation mode candidate and information indicating the switching direction of the operation mode having the largest number.

In Step S135, the display control unit 316 presents the switching direction of the operation mode having the largest number together with the operation mode candidate, by using the information from the operation mode determination unit 313. Specifically, the display control unit 316 causes the display unit 24 to display the switching direction of the operation mode having the largest number together with the determined operation mode candidate.

The driver is capable of determining whether to switch the operation mode of the host vehicle, by watching the operation mode candidate displayed on the display unit 24. Further, the driver is capable of grasping which operation mode has been frequently switched to which operation mode in different vehicles traveling therearound, by watching the switching direction of the operation mode displayed on the display unit 24.

In this regard, in Step S136, the driving control unit 315 determines whether or not operation mode switching has been instructed by the driver.

In the case where it is determined in Step S136 that the operation mode switching has been instructed, the driving control unit 315 generates a control signal corresponding to the operation mode candidate in accordance with the instruction of the operation mode switching, and controls each driving mechanism to switch the operation mode of the host vehicle to the operation mode candidate in Step S137.

Meanwhile, in the case where it is determined in Step S136 that the operation mode switching has not been instructed, the driving control unit 315 does nothing, and the processing is finished.

In accordance with the above-mentioned processing, since the operation mode candidate is determined in accordance with the simultaneous switching and the determined operation mode candidate and the switching direction of the simultaneous switching are presented to the driver, the driver is capable of determining to switch the operation mode to a more appropriate operation mode. As a result, it is possible to realize travelling in a more appropriate operation mode particularly when an accident in which detection of the simultaneous switching is expected to be detected occurs, when an emergency vehicle such as an ambulance approaches, or when a disaster such as an earthquake and a fire occurs.

### (Still Another Example of Operation Mode Switching Processing)

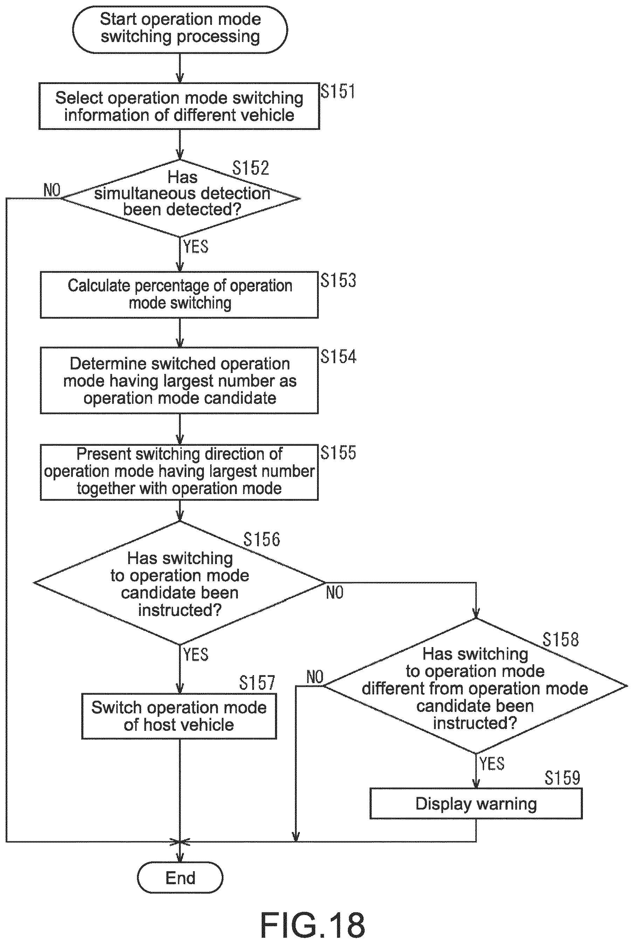

Fig. 18 is a flowchart describing still another example of the operation mode switching processing by the vehicle control unit 301.

Note that since the processing of Steps S151 to S155 in Fig. 18 is similar to the processing of Steps S131 to S135 in Fig. 17, description thereof will be omitted.

That is, in Step S155, after the switching direction of the operation mode having the largest number is presented together with the determined operation mode candidate, the driving control unit 315 determines, in Step S156, whether or not switching of the operation mode to the operation mode candidate has been instructed by the driver.

In the case where it is determined in Step S156 that the switching to the operation mode candidate has been instructed, that is, switching to an operation mode similar to the simultaneous switching in different vehicles travelling around the host vehicle has been instructed, the driving control unit 315 generates a control signal corresponding to the operation mode candidate in accordance with the instruction of switching to the operation mode candidate, and controls each driving mechanism to switch the operation mode of the host vehicle to the operation mode candidate in Step S157.

Meanwhile, in the case where it is determined in Step S156 that the switching to the operation mode candidate has not been instructed, the processing proceeds to Step S158, and the driving control unit 315 determines whether or not switching to an operation mode different from the operation mode candidate has been instructed.

In the case where it is determined in Step S158 that the switching to an operation mode different from the operation mode candidate has been instructed, e.g., the operation mode switching opposite to the simultaneous switching in different vehicles traveling around the host vehicle has been instructed, the driving control unit 315 does nothing and the display control unit 316 functions as an output control unit that outputs a warning and causes the display unit 24 to display (output) the warning in Step S159.

Meanwhile, in the case where it is determined in Step S158 that the switching to an operation mode different from the operation mode candidate has not been instructed, the driving control unit 315 does nothing, and the processing is finished.

In accordance with the above-mentioned processing, for example, since a warning is displayed in the case where the operation mode switching opposite to the simultaneous switching is instructed, the driver is capable of determining to perform switching to an appropriate operation mode without making erroneous determination.

### <4. Modified Example>

Hereinafter, modified examples of the above-mentioned embodiments will be described.

### (Modified Example 1)

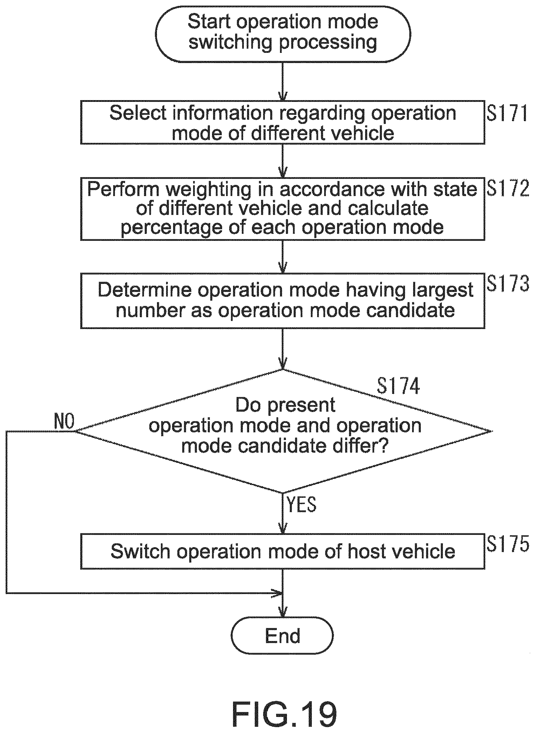

Fig. 19 is a flowchart describing a first modified example of the operation mode switching processing by the vehicle control unit 201 (Fig. 5).

Note that since the processing of Steps S171 and S173 to S175 in Fig. 19 is similar to the processing of Steps S11 and S13 to S15 in Fig. 6, description thereof will be omitted.

That is, in Step S172, the operation mode determination unit 212 weights the operation mode information selected by the information selection unit 211 in accordance with the state of a different vehicle, and calculates the percentage of each operation mode.

The state of the different vehicle is determined by various types of information included in the peripheral vehicle information transmitted from the different vehicle.

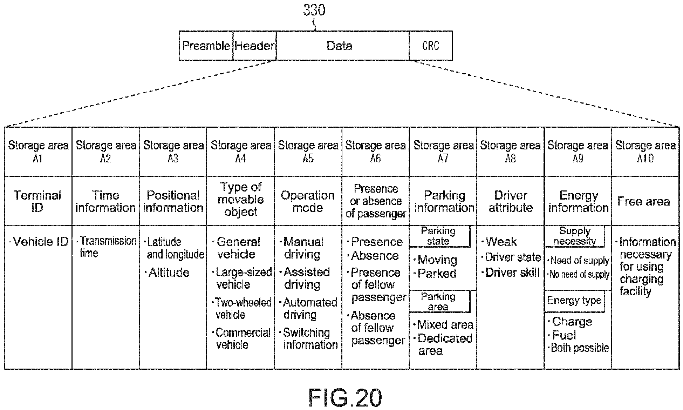

Fig. 20 is a diagram showing a data configuration example of the peripheral vehicle information.

As shown in Fig. 20, peripheral vehicle information 330 includes a preamble, a header, data, and a CRC (Cyclic Redundancy Check).

The "Data" includes storage areas A1 to A10.

The "Storage area A1" is a storage area for a terminal ID. In the Storage area A1, a vehicle ID of a vehicle that performs inter-vehicle communication is stored.

The "Storage area A2" is a storage area for time information. In the Storage area A2, the transmission time of the peripheral vehicle information is stored.

The "Storage area A3" is a storage area for present positional information. In the Storage area A3, altitude in addition to latitude and longitude are stored as the present positional information.

The "Storage area A4" is a storage area for defining the type of a movable object. For example, in the Storage area A4, identification information of the type of a movable object is stored. In the example of Fig. 20, examples of the type of the movable object include "General vehicle", "Large-sized vehicle", "Two-wheeled vehicle", and "Commercial vehicle".

The "Storage area A5" is a storage area for defining the type of an operation mode of a movable object. Therefore, in the Storage area A5, identification information of the mode type is stored. In the example of Fig. 20, examples of the mode type of the operation mode of the movable object include "Manual driving", "Assisted driving", "Automated driving", and "Switching information". The "Switching information" is the above-mentioned operation mode switching information.

The "Storage area A6" is a storage area for defining the presence or absence of a passenger (driver). That is, in the storage area A6, identification information regarding "Presence" or "Absence" of a passenger of a different vehicle. Further, identification information indicating "Presence of fellow passenger" or "Absence of fellow passenger" for identifying the presence or absence of a passenger (fellow passenger) other than the driver may be stored.

The "Storage area A7" is a storage area for defining parking information of a different vehicle. The storage area A7 is classified into a storage area for defining the present "Parking state" of the different vehicle and a storage area relating to the "Parking area" in which the different vehicle parks.

The "Storage area A8" is a storage area for defining the attribute of the driver. In the storage area A8, identification information of the attribute of the driver is stored. Examples of the attribute of the driver include "Weak", "Driver state", and "Driving skill".

The "Storage area A9" is a storage area for defining energy information. The storage area A9 is classified into a storage area for defining energy "Supply necessity" and a storage area relating to "Energy type" supported by the different vehicle.

The "Storage area A10" is a storage area for defining a free area. In the example of Fig. 20, in the storage area A10, various types of information necessary in the case where an owner of a different vehicle that is an electric vehicle uses a charger provided in a charging area of a parking lot are stored.

In Step S172, the operation mode determination unit 212 decreases or increases the weighting of the operation mode of the different vehicle in accordance with the various types of information included in the peripheral vehicle information. Here, decreasing the weighting represents to set the value assigned as the automatic driving flag or manual driving flag shown in Fig. 9 to a value smaller than 1, and increasing the weighting represents the value assigned as the automatic driving flag or manual driving flag to a value larger than 1.

For example, in the case where the attribute of the driver stored in the storage area A8 is weak, since the driver of the different vehicle is a beginner or an elderly person aged 70 years or older, the weighting of the operation mode of the different vehicle is decreased.

Further, in the case where the stability of the driver of the different vehicle is low, e.g., the driving time is long or the degree of fatigue is high, which is indicated by the driver state as the attribute of the driver stored in the storage area A8, the weighting of the operation mode of the different vehicle is decreased.

Further, in the case where the driver of the different vehicle is supposed to have long history of driving and be driving periodically, which is indicated by the driving skill as the attribute of the driver stored in the storage area A8, the weighting of the operation mode of the different vehicle is increased. Further, in the case where the driving skill of the driver of the different vehicle is substantially equal to the driving skill of the driver of the host vehicle, the weighting of the operation mode of the different vehicle may be increased.

Since a taxi driver or truck driver travels on a familiar road or fixed route, the safety is maintained even in the case where the operation mode of such a vehicle is the manual driving. However, there is a high possibility that it is safer by making the operation mode of a vehicle on which a driver who is not accustomed to the road gets the automatic driving. In this regard, in the case where the movable object type stored in the storage area A4 is a commercial vehicle and the operation mode of the vehicle is the manual driving, the weighting of the operation mode of the different vehicle is decreased.

Further, for example, in the case where the host vehicle travels on an elevated highway, the host vehicle is not affected by the driving of a different vehicle travelling on the general road under the elevated highway. In this regard, in the case where the altitude of the position information stored in the storage area A3 is different from the altitude of the host vehicle, the weighting of the operation mode of the different vehicle is made as light as possible.

Note that the operation mode of the different vehicle may be weighted in accordance with information other than the information included in the peripheral vehicle information.

For example, the weighting of the operation mode of a different vehicle travelling on the same lane as that on which the host vehicle travels may be increased, or the weighting of the operation mode of a different vehicle travelling on the opposite lane may be increased.

Further, duration information indicating the time during which the travelling in the same operation mode is continued may be acquired, and the weighting of the operation mode of a different vehicle in which the travelling in the automatic driving has been continued for a long time may be decreased.

Further, the operation mode may be weighted in accordance with the stability of the travelling of a different vehicle. For example, the weighting of the operation mode of a different accelerating vehicle or different vehicle that changes lane many times is made as light as possible.

Further, the operation mode may be weighted on the basis of information indicating the destination or travelling route of a different vehicle. For example, the weighting of the operation mode being the manual driving is changed in accordance with whether a vehicle travelling in the manual driving goes straight for a while or turns at the next signal.

As described above, by performing weighting in accordance with the state of a different vehicle and calculating the percentage of the operation mode, an operation mode candidate that is more suitable for the state of a surrounding vehicle is determined, and it is possible to achieve travelling in a more appropriate operation mode accordingly.

Note that the operation mode of a different vehicle that does not support inter-vehicle communication may be always regarded as the manual driving, and the percentage of the operation mode may be calculated.

Further, although the peripheral vehicle information is received from a different vehicle travelling in the reception range around the host vehicle in the above description, for example, the reception range may be expanded in the travelling direction of the host vehicle such as the range of 300 m in front of the host vehicle and 100 m behind the host vehicle.

### (Modified Example 2)

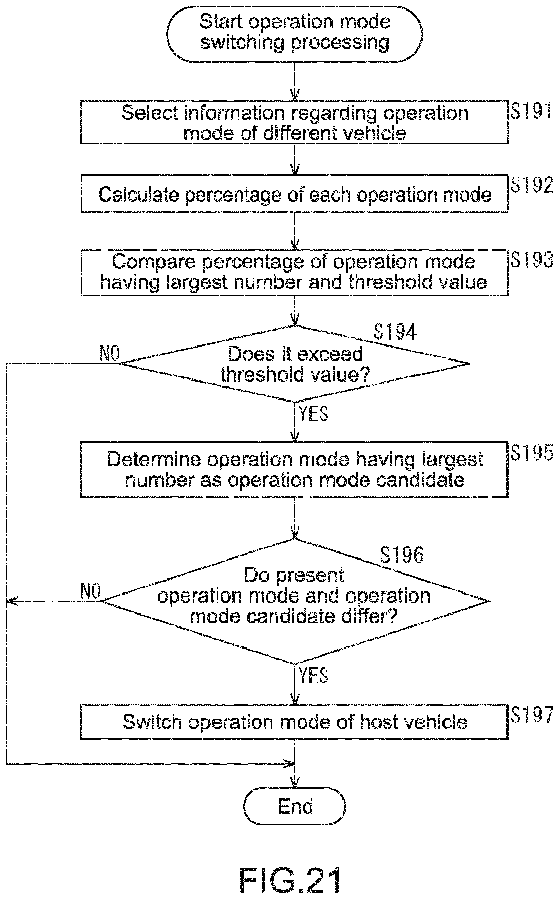

Fig. 21 is a flowchart describing a second modified example of the operation mode switching processing by the vehicle control unit 201 (Fig. 5).

Note that since the processing of Step S191, S192, S196, and S197 in Fig. 21 is similar to the processing of Step S11, S12, S14, and S15 in Fig. 6, description thereof will be omitted.

That is, in Step S193, the operation mode determination unit 212 compares the percentage of the operation mode having the largest number and a predetermined threshold value on the basis of the calculated percentage of the operation mode.

In Step S194, the operation mode determination unit 212 determines whether or not the percentage of the operation mode having the largest number exceeds the threshold value as a result of comparing the operation mode having the largest number and the threshold value.

In the case where it is determined in Step S194 that the percentage of the operation mode having the largest number exceeds the threshold value, the processing proceeds to Step S195, and the operation mode determination unit 212 determines the operation mode having the largest number as the operation mode candidate to be the operation mode of the vehicle 11 (host vehicle).

After that, in the case where the present operation mode and the operation mode candidate differ, the operation mode of the host vehicle is switched to the operation mode candidate.

Meanwhile, in the case where it is determined in Step S194 that the percentage of the operation mode having the largest number does not exceed the threshold value, the operation mode of the host vehicle is not switched to the operation mode candidate and the processing is finished.

Here, the above-mentioned threshold value may be set to a different value depending on the switching direction of the operation mode. Specifically, the threshold value in the case where the operation mode of the host vehicle is switched from the automatic driving to the manual driving and the threshold value in the case where the operation mode is witched from the manual driving to the automatic driving are set to different values.

For example, in the case where the automatic driving is recommended, e.g., the driver of the host vehicle is not used to driving, the manual driving is prevented from being determined to the operation mode candidate when the operation mode of the host vehicle is tried to be switched from the automatic driving to the manual driving unless the percentage of the different vehicle with the operation mode being the manual driving exceeds 60% of all different vehicles travelling around the host vehicle. In contrast, when the operation mode of the host vehicle is tried to be switched from the manual driving to the automatic driving, the automatic driving is determined to the operation mode candidate in the case where the percentage of the different vehicle with the operation mode being the automatic driving exceeds 40% of all different vehicles travelling around the host vehicle. That is, the operation mode of the host vehicle is made difficult to be switched to the manual driving and easily to be switched to the automatic driving.

Further, the above-mentioned threshold value may be set to a different value depending on the environment in which the host vehicle travels. Specifically, the threshold value is set to a different value depending on whether or not the host vehicle travels in the environment in which the manual driving is recommended.

For example, in the case where the host vehicle travels on a highway by the automatic driving, the manual driving is not determined to the operation mode candidate unless the percentage of the different vehicle with the operation mode being the manual driving exceeds 70% of all the different vehicles travelling around the host vehicle. Further, in the case where the host vehicle travels on a general road by the automatic driving, the manual driving is determined to the operation mode candidate in the case where the percentage of the different vehicle with the operation mode being the manual driving exceeds 30% of all the different vehicles travelling around the host vehicle. That is, the operation mode of the host vehicle is made difficult to be switched to the manual driving in a highway and easily to be switched to the manual driving in a general road.

Further, the threshold value may be set to a different value depending on whether or not the host vehicle travels on a snowy road, whether or not the host vehicle travels in the rain, whether or not the host vehicle travels in the nighttime, or the like.

### (Modified Example 3)

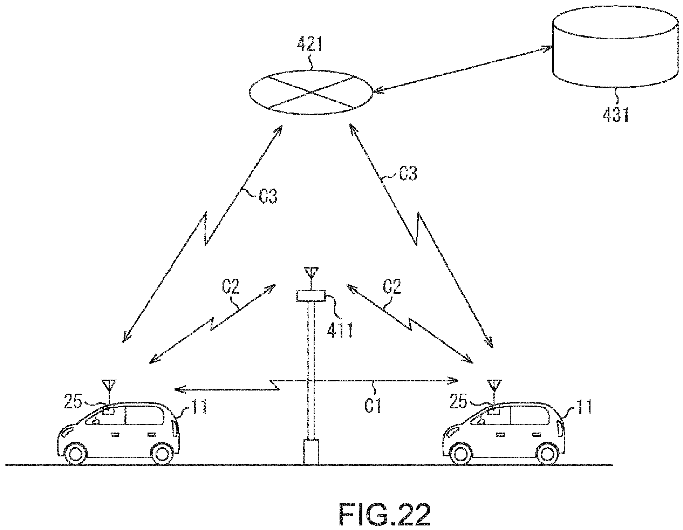

As shown in Fig. 22, in the above-mentioned embodiments, the operation mode of the host vehicle has been determined in accordance with the information regarding the operation mode of the different vehicle acquired from the peripheral vehicle information received by the communication unit 25 through inter-vehicle communication C1.

In addition to this, the information regarding the operation mode of the different vehicle may be selected from the peripheral vehicle information received by the communication unit 25 through road-to-vehicle communication C2 via a roadside device 411.

Further, a server 431 may collect the peripheral vehicle information from the vehicle 11 through communication C3 via a network 421 such as the Internet. In this case, the information selection unit 211 (311) of the host vehicle selects information regarding the operation mode from the peripheral vehicle information that is transmitted from the server 431 and received by the communication unit 25.

Further, in the example of Fig. 22, the peripheral vehicle information may be received through the inter-vehicle communication C1 in the case where the number of different vehicles present in the reception range of the communication unit 25 of the host vehicle is large, and the peripheral vehicle information may be received through the communication C3 with the server 431 in the case where the number of different vehicles present in the reception range is small. Here, the peripheral vehicle information received by the communication C3 with the server 431 is collected from the vehicle 11 that has travelled through the position including that point in the past.

Further, the server 431 may store the information indicating the area in which the operation mode switching frequently occurs, and the information indicating the switching direction. In this case, the vehicle 11 acquires the information from the server 431, and does not perform switching opposite to the switching direction in the vicinity of the area.

For example, at the junction of highways, the number of vehicles whose operation modes are switched from the manual driving to the automatic driving increases. In this case, even if switching from the automatic driving to the manual driving is instructed by the driver, the vehicle 11 does not perform the switching in the vicinity of the junction. This makes it possible to prevent the operation mode switching from frequently occurring.

Further, in the case of transmitting/receiving the peripheral vehicle information through inter-vehicle communication, a specific vehicle may serve as a host and manage the situation within a certain area. In this case, the vehicle to be a host is dynamically changed.

Further, as described above, in the case where simultaneous switching is detected, occurrence of an accident, approach of an emergency vehicle such as an ambulance, occurrence of a disaster such as an earthquake and a fire, and the like are assumed. In this regard, in the example of Fig. 22, in the case where simultaneous switching has been detected, the server 431 may distribute, to each vehicle 11, infrastructure information in the vicinity of the area in which the simultaneous switching has been performed.

### (Regarding Operation Mode Switching)

In the above-mentioned embodiments, in the case where once switching between the manual driving and the automatic driving is performed, next switching is not performed unless a predetermined time has elapsed. Accordingly, it is possible to reduce the burden on the driver due to frequent switching of the operation mode.

Note that in the case where simultaneous switching has been detected, the same switching as the switching direction is performed even if the predetermined time has not elapsed.

The present location of the host vehicle may be checked against map information so as not to perform the operation mode switching at a position where it is dangerous to perform the operation mode switching, such as the exit of a tunnel.

Further, the road on which the host vehicle is currently travelling may be compared with the past travelling history (route information) so as to switch the operation mode to the manual driving in the case where the road on which the host vehicle is currently travelling is on a route on which the host vehicle travels on a daily basis.

Further, in the time zone in which accidents are likely to occur, such as evening when the surroundings become suddenly dark, the operation mode of the host vehicle may be forcibly switched to the automatic driving even in the case where the percentage of the different vehicle with the operation mode being the automatic driving is low.

Further, the operation mode switching may be determined on the basis of not only the present surrounding situation of the host vehicle and but also the future situation of the travelling route (situation in the travelling direction). For example, in the case where many operation modes of different vehicles joining at the junction several km ahead are the manual driving although the present operation mode is the automatic driving, whether to switch the operation mode to the manual driving is determined in the vicinity of the junction. Here, for example, one of different vehicles travelling ahead in the travelling direction becomes a host, and information regarding the future situation of the travelling route is acquired from the host.

Further, also the peripheral vehicle information of a different vehicle entering the lane of the travelling route in the future may be collected by the host.

### (Operation Mode Switching in accordance with Driver)

In the above-mentioned examples, the threshold value compared with the percentage of the operation mode having the largest number among the operation modes of different vehicles is set to a different value depending on the switching direction of the operation mode or the environment in which the host vehicle travels.

In addition thereto, the threshold value may be set to a different value depending on the driver.

Specifically, a person boarding on the host vehicle is specified by the in-vehicle camera that images the inside of the vehicle, and the threshold value is set in accordance with the specified person. In this case, personal authentication is performed on all passengers, and the action of each passenger in the vehicle is recorded as individual action log.

For example, in the case where a man uses a vehicle for commuting, since the traveling route is a familiar road, the threshold value is set so that the operation mode of the host vehicle is the manual driving, even if the number of surrounding different vehicles with the operation mode being the automatic driving is large.

Further, in the case where a woman uses a vehicle for commuting, since the woman makes her makeup while boarding on the vehicle, the threshold value is set so that the operation mode of the host vehicle is the automatic driving, even if the number of surrounding different vehicles with the operation mode being the manual driving is large. Then, the threshold value is set so that in the case where it is determined that the makeup has been completed, the operation mode of the host vehicle is switched to the manual driving when the number of surrounding different vehicle with the operation mode being the manual driving is large. Note that in the case where the section where the woman makes her makeup is defined, the threshold value may be set so that the operation mode of the host vehicle is the automatic driving only in the section.

Further, in the case where a child is aboard in addition to the driver, since the child may take an unexpected action in the vehicle, the threshold value is set so that the operation mode of the host vehicle is the automatic driving even if the number of surrounding different vehicles with the operation mode being the manual driving is large.

Note that embodiments of the present technology are not limited to the above-mentioned embodiments and various modifications can be made without departing from the essence of the present technology.

Further, the present technology may take the following configurations.
(1) A vehicle control apparatus, including:
   a determination unit that determines an operation mode of a host vehicle in accordance with received information regarding an operation mode of a different vehicle.
(2) The vehicle control apparatus according to (1), in which
   the determination unit determines, as the operation mode of the host vehicle, the operation mode indicated by operation mode information with the largest number among the received pieces of operation mode information each indicating the operation mode of the different vehicle.
(3) The vehicle control apparatus according to (2), further including
   a switching unit that switches the operation mode of the host vehicle to the determined operation mode.
(4) The vehicle control apparatus according to (2) or (3), further including
   a presentation control unit that controls presentation of the determined operation mode.
(5) The vehicle control apparatus according to (1), further including
   a detection unit that detects simultaneous switching on a basis of the number of pieces of operation mode switching information, the operation mode switching information indicating that the operation mode of the different vehicle has been switched within a predetermined time period, operation modes of a predetermined number or more of different vehicles being switched within a predetermined time period in the simultaneous switching, in which
   the determination unit determines, where the simultaneous switching has been detected, the operation mode with the largest number after switching among the operation modes after switching indicated by the acquired pieces of operation mode switching information, as the operation mode of the host vehicle.
(6) The vehicle control apparatus according to (5), further including
   a switching unit that switches the operation mode of the host vehicle to the determined operation mode.
(7) The vehicle control apparatus according to (5), further including
   a presentation control unit that controls, where the simultaneous switching has been detected, presentation of a switching direction of the operation mode with the largest number among switching directions of the operation modes indicated by the acquired pieces of operation mode switching information.
(8) The vehicle control apparatus according to (5) or (6), further including
   an output control unit that controls, where the simultaneous switching has been detected and a driver has instructed switching to an operation mode different from the operation mode with the largest number after switching among the operation modes after switching indicated by the acquired pieces of operation mode switching information, output of warning to the driver.
(9) The vehicle control apparatus according to any one of (1) to (8), in which
   the determination unit determines, as the operation mode of the host vehicle, the operation mode indicated by information regarding the operation mode with the largest number among pieces of information regarding the operation mode weighted in accordance with a state of the different vehicle.
(10) [10] The vehicle control apparatus according to any one of (1) to (8), in which
   the determination unit determines, as the operation mode of the host vehicle, the operation mode indicated by information regarding the operation mode with the largest number exceeding a predetermined threshold value among the acquired pieces of information regarding the operation mode.
(11) The vehicle control apparatus according to (10), in which
   the threshold value varies depending on a switching direction of the operation mode.
(12) The vehicle control apparatus according to (10), in which
   the threshold value varies depending on an environment in which the host vehicle travels.
(13) The vehicle control apparatus according to any one of (1) to (12), further including
   an information selection unit that selects, from information transmitted from a server collecting information regarding the operation of the different vehicle, information regarding the operation mode of the different vehicle.
(14) A vehicle control method, including the step of:
   determining an operation mode of a host vehicle in accordance with received information regarding an operation mode of a different vehicle.
(15) A movable object, including:
   a determination unit that determines an operation mode of a host vehicle in accordance with received information regarding an operation mode of a different vehicle.

### Reference Signs List

- 11: vehicle
- 24: display unit
- 25: communication unit
- 51: driving control ECU
- 201: vehicle control unit
- 211: information selection unit
- 212: operation mode determination unit
- 213: operation mode storage unit
- 214: driving control unit
- 215: display control unit
- 301: vehicle control unit
- 311: information selection unit
- 312: simultaneous switching detection unit
- 313: operation mode determination unit
- 314: operation mode storage unit
- 315: driving control unit
- 316: display control unit

## Claims

1. A vehicle control apparatus, comprising:
a determination unit that determines an operation mode of a host vehicle in accordance with received information regarding an operation mode of a different vehicle.

2. The vehicle control apparatus according to claim 1, wherein
the determination unit determines, as the operation mode of the host vehicle, the operation mode indicated by operation mode information with the largest number among the received pieces of operation mode information each indicating the operation mode of the different vehicle.

3. The vehicle control apparatus according to claim 2, further comprising
a switching unit that switches the operation mode of the host vehicle to the determined operation mode.

4. The vehicle control apparatus according to claim 2, further comprising
a presentation control unit that controls presentation of the determined operation mode.

5. The vehicle control apparatus according to claim 1, further comprising
a detection unit that detects simultaneous switching on a basis of the number of pieces of operation mode switching information, the operation mode switching information indicating that the operation mode of the different vehicle has been switched within a predetermined time period, operation modes of a predetermined number or more of different vehicles being switched within a predetermined time period in the simultaneous switching, wherein
the determination unit determines, where the simultaneous switching has been detected, the operation mode with the largest number after switching among the operation modes after switching indicated by the acquired pieces of operation mode switching information, as the operation mode of the host vehicle.

6. The vehicle control apparatus according to claim 5, further comprising
a switching unit that switches the operation mode of the host vehicle to the determined operation mode.

7. The vehicle control apparatus according to claim 5, further comprising
a presentation control unit that controls, where the simultaneous switching has been detected, presentation of a switching direction of the operation mode with the largest number among switching directions of the operation modes indicated by the acquired pieces of operation mode switching information.

8. The vehicle control apparatus according to claim 5, further comprising
an output control unit that controls, where the simultaneous switching has been detected and a driver has instructed switching to an operation mode different from the operation mode with the largest number after switching among the operation modes after switching indicated by the acquired pieces of operation mode switching information, output of warning to the driver.

9. The vehicle control apparatus according to claim 1, wherein
the determination unit determines, as the operation mode of the host vehicle, the operation mode indicated by information regarding the operation mode with the largest number among pieces of information regarding the operation mode weighted in accordance with a state of the different vehicle.

10. The vehicle control apparatus according to claim 1, wherein
the determination unit determines, as the operation mode of the host vehicle, the operation mode indicated by information regarding the operation mode with the largest number exceeding a predetermined threshold value among the acquired pieces of information regarding the operation mode.

11. The vehicle control apparatus according to claim 10, wherein
the threshold value varies depending on a switching direction of the operation mode.

12. The vehicle control apparatus according to claim 10, wherein
the threshold value varies depending on an environment in which the host vehicle travels.

13. The vehicle control apparatus according to claim 1, further comprising
an information selection unit that selects, from information transmitted from a server collecting information regarding the operation of the different vehicle, information regarding the operation mode of the different vehicle.

14. A vehicle control method, comprising the step of:
determining an operation mode of a host vehicle in accordance with received information regarding an operation mode of a different vehicle.

15. A movable object, comprising:
a determination unit that determines an operation mode of a host vehicle in accordance with received information regarding an operation mode of a different vehicle.
